Europäisches Patentamt

European Patent Office

Office européen des brevets

(11) Veröffentlichungsnummer: **0 427 054 A1**

## (12) EUROPÄISCHE PATENTANMELDUNG

(21) Anmeldenummer: 90120523.7

(22) Anmeldetag: 26.10.90

(51) Int. Cl.⁵: **A01B 61/04**

(30) Priorität: 06.11.89 DE 8913071 U

(43) Veröffentlichungstag der Anmeldung:
15.05.91 Patentblatt 91/20

(84) Benannte Vertragsstaaten:
AT BE CH DE FR GB IT LI SE

(71) Anmelder: **Bayerische Pflugfabrik GmbH**
**von-Kühlmann-Strasse 25**
**W-8910 Landsberg a. Lech(DE)**

(72) Erfinder: **Pöttinger, Klaus, Dipl.-Ing.**
**Rossmarkt 23**
**A-4710 Grieskirchen(AT)**

(74) Vertreter: **Dupal, Helmut, Dipl-Ing.**
**Jägerweg 12**
**A-4702 Wallern(AT)**

(54) Drehpflug.

(57) Drehpflug mit wenigstens einem Grindel (2) mit
einem sich öffnenden Grindelgelenk (4), mit zwei
Gelenkachsen, das in Höhenrichtung (5) gegen die
Kraft eines vorgespannten Kraftspeichers (6) verstellbar ist, wobei an der Grindelkonsole (3) des Pflugbalkens (1) ein Zuganker (12) mit dem Grindel (2)
gleichgerichtet gelagert ist, der bis zum rückwärtigen
Ende (13) des Grindels (2) reicht und dort über ein
Stellgelenk (23) mit Stellhebeln (16,17) eines Kniehebels (14,15) verbunden ist, der eine Doppelschere
(20) bildet, wobei mit den Stellhebeln (16,17) gelenkig verbundene Stellhebel (18,19) an dem Grindel (2)
mit einem gemeinsamen Kniehebellager (39) verschwenkbar gelagert sind und mit Spreizhebeln
(21,22) mit den beiden Abstützstellen (24,25) eines
vorgespannten Kraftspeichers (6) gelenkig verbunden sind.

Fig. 2

# DREHPFLUG

Die Erfindung betrifft einen Drehpflug nach dem Gattungsbegriff des Ansprüches 1.

Bei diesen Drehpflügen sind die zusammengehörigen rechts-und linkswendigen Pflugkörper an einem Grindel über Pflugkörperhalter starr befestigt. Beim Auftreten einer Überlastung beim Pflügen werden beide durch die Schwenkbewegung des Grindels aufgehoben und nach Aufhebung der Überlastung zieht der arbeitende Pflugkörper wieder unter Zuhilfenahme der Rückstellkraft eines vorgespannten Kraftspeichers und unter dem Gewicht der Anordnung ein, bis daß dieser Pflugkörper und damit das Grindel die Grundstellung wieder erreicht haben.

Die Rückstellkraft wird dadurch hergestellt, daß das Grindel an einem sich öffnenden, zwei von seiner Mittelachse beabstandete Gelenkachsen aufweisenden Gelenk an dem Pflugbalken gelagert ist und ein Zuganker ebenfalls mit dem Pflugbalken gelenkig verbunden ist, der über ein Hebelwerk einen vorgespannten Kraftspeicher des Grindels bei dessen Ausweichbewegung auflädt.

Bei bisher bekannt gewordenen Lösungen ergab entweder die Anbringung des vorgespannten Kraftspeichers Schwierigkeiten, weil zu wenig Raum im Grindel zur Verfügung stand oder weil die Übertragung der Bewegung zwischen Zuganker und Grindel auf einen Kraftspeicher ein , die hohen Kräfte übertragendes vielgliedriges Hebelwerk erforderte, das wegen dessen Gestaltung nicht ausreichend steif ausgeführt werden konnte, weil man den Kraftspeicher stets starr am Grindel oder Pflugbalken befestigte.

Aufgabe der Erfindung ist es, die bestehenden Nachteile zu beseitigen und eine mechanisch genügend steife Sicherungsvorrichtung mit einfacher Übertragung der Verschwenkbewegung des Grindels zu schaffen.

Diese Aufgabe wird bei einem Drehpflug nach dem Gattungsbegriff des Ansprüches 1 durch dessen kennzeichnende Merkmale gelöst.

Die Unteransprüche 2 bis 12 betreffen besonders vorteilhafte, teilweise erfinderische Ausgestaltungen und bilden gleichzeitig einen Teil der Erfindungsbeschreibung.

Bei einer Absicherung des Drehpfluges nach der Lehre des Anspruches 1 erhält man eine außerordentlich einfache Anordnung, bei der die Stellmittel, durch ihre günstige Lagerung und ihren geringen Platzbedarf, innerhalb des Grindels, sehr robust ausgeführt werden können und bei der die Bemessung des vorgespannten Kraftspeichers wesentlich geringeren und weniger einschneidenden Beschränkungen unterliegt als dies beim bisher bekannt gewordenen Stand der Technik der Fall ist.

Die Merkmale der Ansprüche 2 bis 5, die aus dem Stand der Technik an sich bekannt sind, ergeben bei folgerichtiger Anwendung eine besonders stabile Abstützung des Grindels und des Zugbalkens und eine besonders stabile Schwenkanordnung und für das Verschwenken des Grindels aus seiner Ruhestellung kann die geeignete Relativbewegung zwischen Grindel und Zuganker, für die erforderliche Aufladung des vorgespannten Kraftspeichers hergestellt werden.

Eine weitere Möglichkeit besteht in der Anwendung von zwei Zugankern beiderseits des Grindels, um eine Aufteilung der Kräfte zu erhalten oder, um das Grindel selbst als Profil und nicht als Hohlkörper ausbilden zu können und von den Pflugkörpern her eingeleitete Querkräfte besser ausgleichen zu können.

Eine besonders einfache Anordnung wird durch die mittige Anordnung des Kniehebellagers am Grindel erhalten, wodurch überdies ein Stützpunkt für die Abstützung des vorgespannten Kraftspeichers erhalten wird und die Hebelwege kurz gehalten werden können.

Eine einfache und übersichtliche Anordnung besteht in der symmetrischen Anordnung der Kniehebel und deren Teilhebel.

Für die Auslegung des Kraftspeichers und dessen Aufladewege ist die seitlich unsymmetrische Anordnung der als Spreizhebel dienenden Verlängerungen der Schwenkhebel der Kniehebel besonders gut geeignet.

Gleichzeitig dient auch die schräge Anordnung des Kraftspeichers dem selben Zweck, der dadurch gleichzeitig während der Ausweichbewegung des Grindels eine Schwenkbewegung während seiner Aufladung ausführen kann. Dafür ist die Anordnung außerhalb und unabhängig vom Grindel oder dem Pflugbalken wichtig, weil Lage, Bewegungsverlauf und Bemessung des Kraftspeichers und der Spreizhebel wesentlich günstiger bemessbar sind.

Ein weiteres Mittel zur Beeinflussung der genannten Be -messung besteht in der entsprechenden Auswahl der Längen und Abstände, wie sie in Anspruch 11 und 12 dargelegt sind. Gleichzeitig kann damit auch der Verlauf des Aufladungsgrades des Kraftspeichers entsprechend bemessen werden, je nach dem wie schnell die Spreizung der Verlängerung während der Ausweichbewegung des Grindels fortschreitet.

Ein Ausführungsbeispiel der Erfindung wird an Hand der Zeichnung beschrieben.

Es zeigt :

Fig. 1 Die Seitenansicht (Arbeitsstellung) eines Drehpfluges bis nach dem ersten Pflugkörperpaar, schematisch und

Fig. 2 einen Teilausschnitt von Fig.1 mit dem Grindel und einem Teil des Pflugbalkens, die Pflugkörper weggelassen.

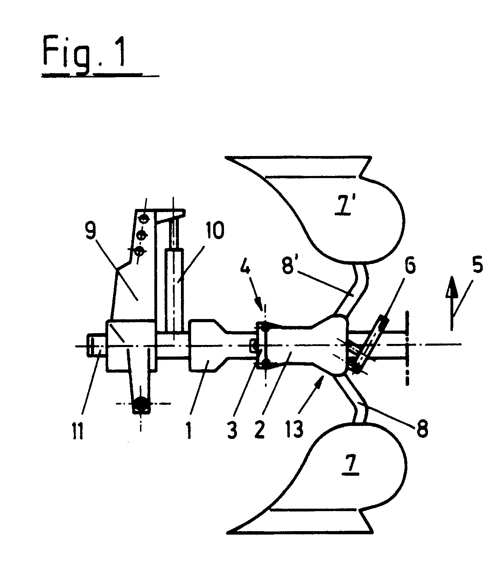

Bei dem in Fig.1 dargestellten Drehpflug ist der Pflugbalken 1 mit einer Wendewelle 11 in der Pflugkoppel 9 mit einem Wendezylinder 10 in die beiden Arbeitsstellungen und die Transportstellung verdrehbar gelagert.

Am Pflugbalken 1 sind Grindelkonsolen 3 befestigt, von denen eine wiedergegeben ist, an denen die Grindel 2 mit einem sich öffnenden Grindelgelenk 4 in Arbeitsstellung des Drehpfluges in Höhenrichtung 5 verschwenkbar gelagert sind, an denen, an den rückwärtigen Enden 13, Pflugkörperhalter 8,8' angeschraubt sind, welche nach oben und unten die gegenwendigen Pflugkörper 7,7' tragen.

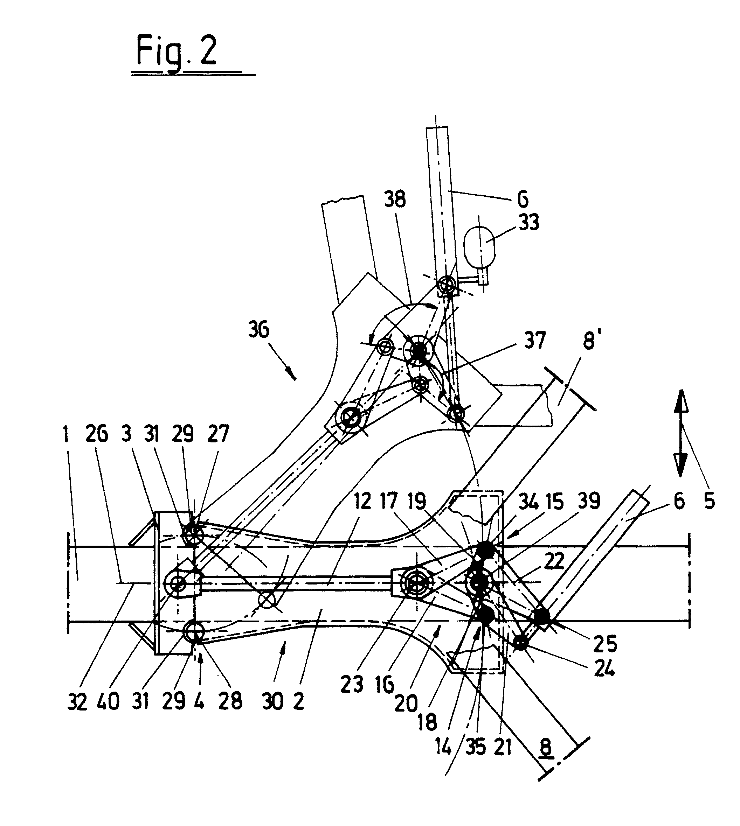

Bei einer Ausweichbewegung des Grindels 2 aus der dargestellten Grundstellung 30 in eine Ausweichstellung 36, wie sie in Fig.2 wiedergegeben ist, wird ein vorgespannter Kraftspeicher 6 aufgeladen, dessen Rückstellkraft zusammen mit dem Gewicht des aufgehobenen Pflugteiles die Rückstellung bewirkt.

Das Grindel 2 besteht aus einem Hohlprofil mit quadratischem Querschnitt, das an der Seite des Pflugbalkens 1 mit dem Grindelgelenk 4 gelagert ist, das eine in Grundstellung obere und untere Schwenkachse 27,28 besitzt, die symmetrisch zur Mittelebene 32 des Grindels 2 angeordnet sind.

Die Lagerbolzen 29 der Schwenkachsen 27,28 sind am Grindel 2 befestigt und ruhen in Grundstellung 30 des Grindels 2 in oben und unten beiderseits an der Grindelkonsole 3 angebrachten Lagerpfannen 31.

Im Inneren des Grindels 2 ist ein Zuganker 12, in Grundstellung 30 des Grindels 2 in der Längsachse 26 liegend, angeordnet, der zum Pflugbalken 1 hin an einer Achse 40 in Höhenrichtung 5 verschwenkbar gelagert ist und an seinem anderen Ende mit einem Stellgelenk 23 ausgestattet ist, an dem die Stellhebel 16,17 zweier symmetrisch zur Mittelebene 32 des Grindels 2 angeordneter Kniehebel 14,15 angelenkt sind, die über die Anlenkungen 34,35 mit den Schwenkhebeln 18,19 der Kniehebel 14,15 verbunden sind, die ihrerseits an einem Kniehebellager 39, in Form eines am rückwärtigen Ende 13 des Grindels 2 befestigten Lagerbolzens , ver -schwenkbar gelagert sind.

Diese Schwenkhebel 18,19 sind mit als Winkelhebel ausgebildeten, über die Anlenkungen 34,35 der Stellhebel 16,17 hinausreichenden Verlängerungen 21,22 versehen, die in Grundstellung 30 des Grindels 2 mit ihren Enden an einer Seite der Mittelebene 32 liegend an den beiden Abstützstellen 24 und 25 des Kraftspeichers 6 angelenkt sind.

Die zwischen dem Schwenkhebel 18 und dessen Verlängerung 21 bestehende Abwinkelung 37 ist geringer als die Abwinkelung 38 zwischen dem anderen Schwenkhebel 19 und dessen Verlängerung 22, wodurch die Enden der Verlängerungen 21,22 in der Grundstellung 30 des Grindels 2 näher zueinandergebracht, an den Abstand der Abstützstellen 24,25 angepaßt sind.

Der vorgespannte Kraftspeicher 6 ist entweder als Federspeicher wie in der Grundstellung 30 des Grindels 2 angedeutet, oder bevorzugt als einfachwirkender hydraulischer Kraftzylinder mit vorgespanntem hydraulischem Kraftspeicher 33 ausgebildet, wie dies in der Ausweichstellung 36 angedeutet ist.

Der vorgespannte Kraftspeicher 6 ist nur an den Abstützstellen 24 und 25 mit dem Pflug verbunden und in Grundstellung 30 des Grindels 2 schräg und quer zur Mittelebene 32 ausgerichtet, während er bei Verschwenkung des Grindels 2 in die - dünn gezeichnete- Ausweichstellung 36 nach einer Seite der Mittelebene 32 verschwenkt und gleichzeitig durch Spreizung der Verlängerungen 21,22 zwischen den Abstützstellen 24 und 25, aufgeladen wird, die durch die Streckung der beiden Kniehebel 14 und 15 unter der Wirkung der Relativbewegung zwischen Zuganker 12 und Grindel 2 bei Verschwenken desselben hervorgerufen wird, wenn durch ein Hindernis im Boden eine Stellkraft entsteht, die die Vorspannkraft des Kraftspeichers 6 überschreitet.

Bezugszeichenverzeichnis :

1 Pflugbalken
2 Grindel
3 Grindelkonsole
4 Grindelgelenk
5 Höhenrichtung
6 vorgespannter Kraftspeicher
7,7' Pflugkörper
8,8' Pflugkörperhalter
9 Pflugkoppel
10 Wendezylinder
11 Wendewelle
12 Zuganker
13 rückwärtiges Ende des Grindels 2
14 Kniehebel
15 Kniehebel
16 Stellhebel des Kniehebels 14
17 Stellhebel des Kniehebels 15
18 Schwenkhebel des Kniehebels 14
19 Schwenkhebel des Kniehebels 15
20 Doppelschere
21 Verlängerung des Schwenkhebels 18 einen Spreizhebel bildend
22 Verlängerung des Schwenkhebels 19 einen Spreizhebel bildend
23 Stellgelenk

24 Abstützstelle für die Verlängerung 21
25 Abstützstelle für die Verlängerung 22
26 Längsachse des Grindels 2
27 obere Schwenkachse des Grindels 2
28 untere Schwenkachse des Grindels 2
29 Lagerbolzen der Schwenkachsen 27,28
30 Grundstellung des Grindels 2
31 Lagerpfannen der Lagerbolzen 29
32 Mittelebene des Grindels 2 durch die Längsachse 26
33 vorgespannter hydraulischer Kraftspeicher
34 Anlenkung des Stellhebels 16 an den Schwenkhebel 18
35 Anlenkung des Stellhebels 17 an den Schwenkhebel 19
36 Ausweichstellung des Grindels 2
37 Abwinkelung zwischen Verlängerung 21 und Schwenkhebel 18
38 Abwinkelung zwischen Verlängerung 22 und Schwenkhebel 19
39 Kniehebellager
40 Achse des Zugankers 12

## Ansprüche

1. Drehpflug mit wenigstens einem, am Pflugbalken an einer Grindelkonsole, mit einem sich öffnenden, zwei Gelenkachsen aufweisenden Grindelgelenk, in Höhenrichtung gegen die Rückstellkraft eines vorgespannten Kraftspeichers, verschwenkbaren Grindel , das beiderseits gegenwendige Pflugkörper an mit diesem fest verbundenen Pflugkörperhaltern trägt, dadurch gekennzeichnet, daß an der Grindelkonsole (3) wenigstens ein Zuganker (12) mit dem Grindel (2) gleichgerichtet schwenkbar gelagert ist, der bis in den Bereich des rückwärtigen Endes (13) des Grindels (2) reicht und dort mit den Stellhebeln (16,17) von zwei einander gegenüberliegenden, eine Doppelschere (20) bildenden Kniehebel (14,15) über ein Stellgelenk (23) verbunden ist, deren mit den Stellhebeln (16,17) gelenkig verbundene Schwenkhebel (18,19) an dem Grindel (2) mit einem gemeinsamen Kniehebellager (39) verschwenkbar gelagert sind und mit Verlängerungen (21,22) versehen sind, die als Spreizhebel mit den beiden Abstützstellen (24,25)des vorgespannten Kraftspeichers (6) gelenkig verbunden sind.

2. Drehpflug nach Anspruch 1, dadurch gekennzeichnet, daß das Grindel (2) aus einem Rohr, vorzugsweise mit quadratischem Querschnitt, besteht, dessen Flächen nach oben und unten gerichtet sind.

3. Drehpflug nach einem der vorhergehenden beiden Ansprüche, dadurch gekennzeichnet, daß das Grindelgelenk (4) an der Grindelkonsole (3) von seiner Längsachse (26) beabstandet eine obere Schwenkachse (27) und eine untere Schwenkachse (28) aufweist.

4. Drehpflug nach dem vorhergehenden Anspruch, dadurch gekennzeichnet, daß die obere und die untere Schwenkachse (27,28) von Lagerbolzen (29) gebildet werden, die an dem Grindel(2) festgehalten sind und die beide in Grundstellung (30) des Grindels (2) in beiderseits an der Grindelkonsole (3) oben und unten angebrachten Lagerpfannen (31) zur Anlage kommen.

5. Drehpflug nach Anspruch 1, dadurch gekennzeichnet, daß ein einziger Zuganker (12) angebracht ist, der in der Grundstellung (30) des Grindels (2) in dessen Längsachse (26) liegt.

6. Drehpflug nach Anspruch 1, dadurch gekennzeichnet, daß zwei Zuganker (12) angebracht sind, die in Grundstellung (30) des Grindels (2) zu dessen beiden Seiten angeordnet sind und in dessen Mittelebene (32) durch seine Längsachse (26) liegen.

7. Drehpflug nach Anspruch 1, dadurch gekennzeichnet, daß das Kniehebellager (39) in der Mittelebene (32) des Grindels (2) angeordnet ist und von einem senkrecht zu dessen Schwenkbewegung am Grindel (2) eingesetzten Lagerbolzen gebildet ist.

8. Drehpflug nach Anspruch 1, dadurch gekennzeichnet, daß die beiden Kniehebel (14,15) symmetrisch zur Mittelebene (32) des Grindels (2) angeordnet sind.

9. Drehpflug nach Anspruch 1, dadurch gekennzeichnet, daß die Verlängerungen (21,22) der Schwenkhebel (18,19) der Kniehebel (14,15) in Grundstellung (30) des Grindels (2) beide an einer Seite von dessen Mittelebene (32) liegen und zur Seite gerichtet enden.

10. Drehpflug nach Anspruch 1, dadurch gekennzeichnet, daß der Kraftspeicher (6) quer zur Mittelebene (32) des Grindels (2) ausgerichtet ist und vorzugsweise von einem einfachwirkenden hydraulischen Kraftzylinder mit einem vorgespannten hydraulischen Kraftspeicher (33) gebildet ist.

11. Drehpflug nach einem der vorhergehenden beiden Ansprüche 1 oder 9, dadurch gekennzeichnet, daß die Länge der Verlängerungen (21,22) zwischen dem Kniehebellager (39) und den Abstützstellen (24,25) des Kraftspeichers (6), sowie die Hebellänge der Schwenkhebel (18,19) zwischen dem Kniehebellager (39) und den Anlenkungen (34,35) der Stellhebel (16,17) entsprechend dem Bewegungsverlauf den der Kraftspeicher (6) beim Verschwenken des Grindels (2) in die Ausweichstellung (36) nimmt, bemessen ist.

12. Drehpflug nach einem der vorhergehenden Ansprüche 1, 9 oder 11, dadurch gekennzeichnet, daß die Stellhebel (16,17) der Kniehebel (14,15) mit ihren Verlängerungen (21,22) Winkelhebel bilden, deren Abwinkelung (37,38) nach der Lage und dem Bewegungsverlauf des Kraftspeichers (6) bemessen ist.

# Fig. 1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3152450 (H. NIEMEYER SÖHNE GMBH & CO KG) <br> * Anspruch 1; Figur 2 * <br> --- | 1 | A01B61/04 |
| A | EP-A-0123067 (H. NIEMEYER SÖHNE GMBH & CO KG) <br> * Anspruch 1; Figuren 1-3 * <br> --- | 1 | |
| A | EP-A-0229484 (RANSOMES SIMS & JEFFERIES) <br> * Spalte 2, Zeile 32 - Spalte 3, Zeile 16; Figur 1 * <br> --- | 1 | |
| A | FR-A-2593992 (A. ROGER) <br> * Seite 4, Zeile 20 - Seite 5, Zeile 10; Figuren 1, 2 * <br> --- | 1 | |
| A | Motorisation et Technique agricole <br> no. 83, November 1985, Paris, FR <br> Seiten 7 - 20; H. TERRIER: <br> "Les sécurités sur corps de charrue" <br> * Seite 19 * <br> --- | 1 | |
| A | EP-A-0194168 (SOCIETE DE CONSTRUCTIONS MECANIQUES HUARD-UCF S.A.) <br> * Anspruch 1; Figuren 1, 2 * <br> --- | 1 | **RECHERCHIERTE SACHGEBIETE (Int. Cl.5 )** <br><br> A01B |
| A | FR-A-2471123 (FIRMA RABEWERK HEINRICH CLAUSING) <br> * Seite 3, Zeile 36 - Seite 5, Zeile 36; Figuren 1-3 * <br> ----- | 1 | |

Der vorliegende Recherchenbericht wurde für alle Patentansprüche erstellt

| Recherchenort | Abschlußdatum der Recherche | Prüfer |
|---|---|---|
| BERLIN | 12 DEZEMBER 1990 | MERCKX A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument